# EUROPÄISCHE PATENTSCHRIFT

(11) **EP 3 179 492 B1**
(45) Veröffentlichungstag und Bekanntmachung des Hinweises auf die Patenterteilung: **29.08.2018**
(21) Anmeldenummer: 15198574.4
(22) Anmeldetag: 09.12.2015
(51) Int. Cl.: H01F 27/38

(54) **SCHUTZEINRICHTUNG FÜR EINEN TRANSFORMATOR VOR GEOMAGNETICALLY INDUCED CURRENTS**
PROTECTIVE DEVICE FOR A TRANSFORMER AGAINST GEOMAGNETICALLY INDUCED CURRENTS
DISPOSITIF DE PROTECTION POUR UN TRANSFORMATEUR CONTRE DES COURANTS INDUITS GÉOMAGNÉTIQUEMENT

(43) Veröffentlichungstag der Anmeldung: 14.06.2017
(73) Patentinhaber: Siemens Aktiengesellschaft, 80333 München (DE)
(72) Erfinder: HAMBERGER, Peter, Dr., 4202 Kirchschlag bei Linz (AT)
(74) Vertreter: Maier, Daniel Oliver

(56) Entgegenhaltungen:
- WO-A1-2005/109593
- WO-A1-2014/191023
- WO-A1-2015/065502
- "Zigzag Grounding Transformers", , 1. Januar 2010 (2010-01-01), XP055090570, Gefunden im Internet: URL:http://www.postglover.com/Literature/G T210-08_Zigzag_Trans.pdf [gefunden am 2013-11-27]

## Beschreibung

### Technisches Gebiet

Die Erfindung betrifft allgemein das technische Gebiet von elektrischen Transformatoren, insbesondere eine Schutzeinrichtung für einen Transformator, der oberspannungsseitig mittels Zuleitungen an ein Netz zur Übertragung und Verteilung elektrischer Energie angeschlossen ist, wobei der Transformator eine Sternpunkterdung aufweist.

### Stand der Technik

Es ist lange bekannt, dass elektrische Transformatoren, wie sie üblicherweise in Energieübertragung- und Verteilungsnetzen eingesetzt werden, so genannten geomagnetisch induzierten Strömen ("Geomagnetically Induced Currents", im Folgenden kurz GIC) ausgesetzt sein können, die mehr als 100 A betragen können und gravierende Störungen im Betriebsverhalten von Transformator hervorrufen können.

Ein GIC wird durch starke Sonnenwinde hervorgerufen, welche eine zeitliche Änderung des Erdmagnetfeldes bewirken. Wenn diese zeitliche Änderung des Erdmagnetfeldes eine Leiterschleife durchsetzt, - diese Leiterschleife kann beispielsweise aus einem Leitungsabschnitt des Energieverteilungsnetzes und der Erde als Rückleiter gebildet sein -, so wird in dieser Leiterschleife eine Spannung induziert, die mehrere Volt pro Kilometer Leitungslänge betragen kann. Diese induzierte Spannung bewirkt die Ausbildung eines niederfrequenten Leitungsstromes, des so genannten "GIC-Stroms".

Der "GIC-Strom" überlagert sich dem in den Leitern des Verteilungsnetzes fließenden Wechselstrom, so dass sich ein Mischstrom ausbildet. Wird dieser Mischstrom nun über Zuleitungen einem Transformator oder einem Umspannwerk zugeleitet, so führt dies zu einer unsymmetrischen Aussteuerung des magnetischen Werkstoffs im Transformatorkern: in jener Halbwelle, in der sich der Wechselfluss und der durch GIC hervorgerufene Gleichfluss additiv überlagern wird der weichmagnetische Werkstoff des Transformators in die Sättigung getrieben. Dadurch verhält sich der Transformator in dieser Halbwelle wie eine Drossel mit hoher Blindleistungsaufnahme. Dies hat zur Folge, dass in den Zuleitungen der Primärseite des Transformators Ströme mit hohen Oberschwingungen auftreten. Das Streufeld im Transformator weist nun auch diese Oberschwingungen auf. Durch diese höheren Frequenzanteile im Streufeld kommt es zu erhöhten Wirbelstromverlusten in den metallischen Teilen des Transformators und auch zu einer veränderten Stromverteilung in den Wicklungen des Transformators, was lokal zu unzulässig hoher Erwärmung führen kann. Eine erhöhte Erwärmung beeinträchtigt die Lebensdauer der elektrischen Wicklung des Transformators und es können Spaltgase durch thermische Zersetzung der Isolierflüssigkeit entstehen.

Ein weiteres Problem liegt darin, dass es durch die hohe Blindleistungsaufnahme auch zu einem unzulässig hohen Spannungsabfall kommt bzw. durch die Oberschwingungen ein Schutzgerät fehlerhaft ansprechen kann, so dass es durch GIC-Stromfluss im schlimmsten Fall zu einem Black-out in Energieverteilungsnetz kommen kann.

Der GIC-Stromfluss verursacht aber auch eine erhöhte Geräuschemission, die insbesondere dann von Nachteil ist, wenn der Transformator in der Nähe eines Wohnbereichs installiert ist.

Der GIC kann in einem für die Auswirkung relevanten Zeitfenster quasi als Gleichstrom angesehen werden. GIC ist ein Naturereignis, wobei das Auftreten eines Sonnenwinds zwar erfasst werden kann, dessen zeitlicher Verlauf im Netz in Größe und Richtung aber nicht vorhersehbar ist. Es kann sein, dass in einem Netz zur Versorgung und Übertragung elektrischer Energie durch GIC unterbrochen wird.

Um einen Transformator in einem Energieverteilungsnetz vor GIC zu schützen, sind so genannte DC/GIC-Blocker bekannt. Ein GIC-Blocker besteht im Wesentlichen aus einem Kondensator. Der Kondensator ist zwischen dem Sternpunkt und der Erdverbindung des Transformators geschaltet. Um den Kondensator vor Überstrom oder Überspannung zu schützen, sind aufwändige Schutzeinrichtungen erforderlich, die einen hohen Kostenaufwand verursachen. Von Nachteil ist ferner, dass ein GIC-Blocker nur jenen Transformator, zwischen dessen Sternpunkt und Erde er geschalten ist, schützen kann. Andere Transformatoren können daher somit stärker mit GIC beaufschlagt werden. Bei Spar-Transformatoren ergibt sich als weiterer Nachteil, dass derartige GIC-Blocker nicht ohne weiteres eingesetzt werden können, da es keine galvanische Trennung zwischen Primär- und Sekundärseite gibt.

Von Seiten der Unternehmen der Energieversorgung erhebt sich die Forderung, dass in Elektroenergiesystemen GIC-Ströme im Sternpunkt von bis zu 300 A beherrscht werden müssen, was pro Phase einen GIC Strom von 100 A entsprechen würde. Mit bislang bekannten Schutzvorrichtungen können diese hohen GIC-Ströme nur mit großem Aufwand beherrscht werden.

Eine einem Transformator vorgeschaltete Schutzvorrichtung ist aus WO 2005 109 593 bekannt.

Es besteht daher ein Bedarf nach einer Schutzeinrichtung, mit der ein oder mehrere Transformatoren in einem Netz zur Versorgung und Übertragung elektrischer Energie möglichst einfach und zuverlässig auch vor hohen GIC-Strömen geschützt werden kann.

### Darstellung der Erfindung

Es ist eine Aufgabe der vorliegenden Erfindung eine Schutzeinrichtung für einen Transformator bereitzustellen, mit der dieser auf möglichst einfache Weise und über eine lange Betriebsdauer zuverlässig vor GIC geschützt werden kann.

Die Lösung der Aufgabe erfolgt durch eine Schutzeinrichtung für einen Transformator mit den Merkmalen des Anspruchs 1.

Vorteilhafte Ausgestaltungen, Aspekte und Einzelheiten der Erfindung ergeben sich aus den abhängigen Ansprüchen, der Beschreibung und der beigefügten Zeichnung.

Der Erfindung liegt die Erkenntnis zu Grunde, dass im Falle eines symmetrischen Netzes in der Praxis in den drei Phasen eines Drehstromübertragungssystems zeitlich gleichgroße GIC-Ströme fließen, d.h. die GIC-Ströme in symmetrischen Komponenten aufgespalten nur einen niederfrequenten Nullstrom verursachen, der im Zeitfenster der Auswirkung als Gleichstrom (im folgenden auch als DC-Anteil bezeichnet) angesehen werden kann.

Hier setzt die Erfindung an, indem dieser in der Zuleitung zu einem Trafo bzw. zu einer Transformatorstation fließende GIC-Strom zu eine großen Teil zur Erde hin abgeleitet wird, bevor er im Transformator Schaden anrichten kann.

Es ist vorgesehen, dass jede oberspannungsseitige Zuleitung zu einem Transformator mittels eines Nullpunktbildners auf Erde geschalteten ist, wobei der Nullpunktbildner einen Nullpunktwiderstand (R_{0GIC}) aufweist, der kleiner ist als der Nullpunktwiderstand (R_{0sub}) der Sternpunkterdung des Transformators, so dass ein auf den Zuleitungen fließender Geomagnetically Induced Current (GIC) zur Erde abgeleitet ist.

Der Nullpunktbildner hat einen kleinen Nullwiderstand, aber eine hohe Mit- und Gegenimpedanz. Dies hat den Effekt, dass der für die magnetische Aussteuerung unerwünschte DC-Anteil d.h. der GIC, zumindest nicht in seiner Gesamtheit in den Transformator gelangt, sondern ein großer Anteil vor der Einspeisung zum Transformator zur Erde abgeleitet wird. Folglich verringert sich die Schadwirkung im Transformator: Die unsymmetrische Aussteuerung des Transformator-Kernmaterials ist geringer. Die Wirbelstromverluste und damit auch die Erwärmung verringern sich. Eine thermisch geringer beanspruchte Wicklungsisolation ist günstig für eine lange Lebensdauer der Transformatorwicklung. Die Betriebsgeräusche des Transformators sind geringer. Von besonderem Vorteil ist dabei, dass die Schutzeinrichtung aus rein passiv wirkenden Bauelementen zusammengesetzt ist, die mit vergleichsweise geringem Aufwand auch für hohe GIC-Ströme von mehr als 100 A ausgelegt werden können und über einen langen Betriebszeitraum störungsfrei arbeiten. Weiterhin ist von Vorteil, wenn diese Vorrichtung an der Zuleitung zur Trafostation installiert ist, so dass alle elektrischen Maschinen (Transformatoren) die nachfolgend installiert sind, geschützt werden. Hieraus ergibt sich im Besonderen der wirtschaftliche Vorteil.

Um einen möglichst großen GIC-Anteil vom Transformator fern zu halten, kann eine Ausführung günstig sein, bei der der Wert des Nullpunktwiderstandes (R_{0GIC}) des Nullpunktbildners ein Zehntel oder weniger des Wertes des Nullpunktwiderstandes (R_{0sub}) der Umspannstation ist.

Eine hinsichtlich Zuverlässigkeit und Akzeptanz günstige Ausführungsform der Erfindung kann so konstruiert sein, dass der Nullpunktbildner als 3-Phasen-Transformator ausgebildet ist, dessen Wicklungen in Zickzack verschalten sind. Die Schutzeinrichtung weist vorteilhaft nur Wicklungsspulen auf, die aus dem Transformatorenbau bekannt sind.

Um die Verluste der Schutzeinrichtung möglichst gering zu halten, kann es günstig sein, wenn in jeder Verbindungsleitung, die jeweils eine der drei Wicklungsstränge des Nullpunktbildners mit korrespondierenden Leitungen des Dreiphasennetzes verbinden eine Schaltvorrichtung angeordnet ist. Dadurch kann die Schutzeinrichtung an das Netz geschaltet bzw. getrennt werden. Sie kann dann zum Einsatz gebracht werden, wenn tatsächlich GIC in den Zuleitungen beobachtet wird bzw. zu erwarten ist. Andernfalls steht die Schutzeinrichtung im Modus "stand by". Aus diesem "stand-by"-Modus kann eine derartige Schutzvorrichtung alleine oder zusammen mit anderen jederzeit durch eine Schalthandlung im Netz aktiviert werden. Die Schutzvorrichtung weist eine hohe Verfügbarkeit auf. Für die Schaltvorrichtung geeignete Schalter sind handelsüblich. Da die Schutzeinrichtung nur wenn erforderlich aktiviert wird, sind die Leerlaufverluste aus wirtschaftlicher Sicht irrelevant. Daher können weniger hochwertige aber günstigere Materialien verwendet werden.

Kostengünstig kann eine Ausführung der Erfindung sein, bei der der Nullpunktbildner einen aus Blechlamellen geschichteten magnetischen Kern aufweist, der aus herkömmlichem (nicht kornorientierten) Elektroblech hergestellt ist. Die Verwendung gleichartiger Materialien erhöht zudem die Akzeptanz.

Eine weitere Kostensenkung kann erreicht werden, indem für die Wicklungen des Nullpunktbildners Aluminium verwendet wird.

Eine hinsichtlich der Herstellungskosten ganz besonders günstige Ausführung berücksichtigt die zu erwartende Betriebszeit der Schutzvorrichtung. Da in der Schutzvorrichtung kaum nennenswerte Verlustleistungen anfallen und die prognostizierte Betriebszeit vergleichsweise zum schützenden Transformator geringer ist, können kostengünstige Materialien verwendet werden. Da auch die Wirbelstromverluste aus wirtschaftlicher Sicht, wie oben bereits erwähnt, irrelevant sind, kann jede Wicklung aus einem isolierten Flachleiter aus Aluminium gebildet werden. Die Spannungsklasse der Vorrichtung kann geringer sein, als die des zu schützenden Transformators.

Mit Vorteil kann die Schutzvorrichtung bedarfsweise aktiviert werden, wobei die Schaltvorrichtung mit einer globalen oder regionalen Erfassungs- und/oder Meldeeinrichtung für Geomagnetically Induced Current (GIC) signalleitend verbunden sein kann. Dadurch können mehrere Transformatoren, die in einem Netz zur Übertragung und Verteilung von Energie angeordnet sind, schnell und zuverlässig automatisch geschützt werden.

### Kurzbeschreibung der Zeichnung

Zur weiteren Erläuterung der Erfindung wird im nachfolgenden Teil der Beschreibung auf Zeichnungen Bezug genommen, aus denen weitere vorteilhafte Ausgestaltungen, Einzelheiten und Weiterbildungen der Erfindung anhand eines nicht einschränkenden Ausführungsbeispiels zu entnehmen sind. Es zeigen:
- Figur 1: eine erste Ausführung der Erfindung in einem vereinfachten Schaltbild;
- Figur 2: ein Ersatzschaltbild gemäß der Figur 1;
- Figur 3: eine zweite Ausführung der Erfindung in einem vereinfachten Schaltbild.

### Ausführung der Erfindung

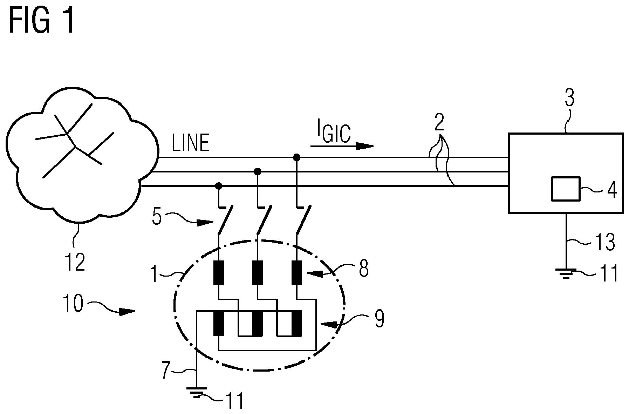

Figur 1 zeigt in einer vereinfachten Darstellung ein Schaltbild eines ersten Ausführungsbeispiels der Erfindung.

Mit dem Bezugszeichen 10 ist insgesamt die Schutzeinrichtung gekennzeichnet. Sie besteht im Wesentlichen aus einem Nullpunktbildner 1, der die drei Phasen der Zuleitungen 2 (LINE)zu einem Transformator 4 mit Erdpotential 11 verbindet. Der Transformator 4 ist in einer Umspannstation 3 untergebracht.

In einer Umspannstation 3, - auch Transformatorstation, Netzstation oder Ortsnetzstationen genannt -, wird in einem Energieversorgungsnetz 12 die elektrische Energie aus einem Hochspannungsnetz (750-110kV)auf ein Mittelspannungsnetz oder aus einem Mittelspannungsnetz (zum Beispiel 10-30 kV) auf ein Niederspannungsnetz (Ortsnetz mit einer Spannung von beispielsweise 400 V/230 V) transformiert. In einer Umspannstation 3 befindet sich mindestens ein Transformator mit entsprechenden Schaltanlagen für das Mittelspannungsnetz und Niederspannungsnetz, sowie Schutzeinrichtungen.

Die erfindungsgemäße Schutzeinrichtung 10 ist dabei entweder in örtlicher Nähe einer Umspannstation 3 angeordnet, oder befindet sich in dieser Umspannstation 3 selbst.

Vorausgesetzt wird dabei ein symmetrisches Netz, wobei GIC-Ströme I_{GIC} in allen drei Leitern (LINE) eines drei Phasensystems gleich aufgeteilt sind.

Ferner wird in den dargestellten Ausführungsbeispielen von einer niederohmig Sternpunkterdung ausgegangen, bei der entweder die Erdung starr oder mittels eines Widerstandes erfolgt.

Wie bereits einleitend dargestellt, ist das Ziel der vorliegenden Erfindung der Schutz des Transformators 4 vor den Auswirkungen eines Geomagnetically Induced Current (GIC), die im Netz 12 induziert werden.

Hierfür ist ein so genannter Nullpunktbildner 1 vorgesehen.

Der Nullpunktbildner 1 ist ein 3-Phasen-Transformator, der quasi im Leerlauf betrieben wird. Er weist einen kleinen Nullwiderstand auf, hat aber eine hohe Mit- und Gegenimpedanz. Er besteht im Wesentlichen aus einem weichmagnetischen Kern und einer Wicklungsanordnung 8, 9, die in Zickzack verschaltet ist. Die Wicklungsanordnung besteht ihrerseits aus drei zuleitungsseitigen Wicklungen 8 und drei erdseitigen Wicklungen 9. Die Wicklungen 8, 9 sind über einen in Figur 1 nicht näher dargestellten weichmagnetischen Kern miteinander magnetisch gekoppelt. Der magnetische Kern besteht aus Blechlamellen eines Elektroblechs, wie es im Transformatorbau verwendet wird. Jede dieser Wicklungen 8,9 bildet einen komplexen Widerstand, mit einem ohmschen Widerstandsanteil und einem induktiven Widerstandsanteil.

Die Schutzeinrichtung 10 funktioniert nun so, dass die Wicklungen 8, 9 des Nullpunktbildners 1 bezüglich Drehstrom eine hohe Impedanz darstellen, bezüglich GIC-Gleichstrom aber der ohmsche Widerstandsanteil R_{0GIC}, verglichen mit dem ohmsche Widerstand R_{0sub}, der Sternpunkterdung 13 des Transformators 4 bzw. der Umspannstation, vergleichsweise gering ist. Ein bevorzugtes Widerstandsverhältnis ist, wenn der Wert des Nullpunktwiderstandes R_{0GIC} des Nullpunktbildners 1 ein Zehntel oder weniger des Wertes des Nullpunktwiderstandes R_{0sub} der Umspannstation 3 ist. Dieses Widerstandsverhältnis hat den Effekt, dass der auf den Zuleitungen 2 in Richtung Transformator 4 fließende I_{GIC} den niederohmigen Pfad wählt und zu einem großen Teil über die Schutzeinrichtung 10 zu Erde abgeleitet wird. Diese Ableitung erfolgt vor dem Transformator. Es gelangt nur ein vergleichsweise geringer Anteil des GIC zum Trafo 4 bzw. zur Umspannstation 3. Dadurch ist der störende GIC-Einfluss für einen oder für mehrere in der Umspannstation 3 angeordnete Transformatoren 4 zumindest gemildert, wenn nicht praktisch annulliert.

Mit anderen Worten gesagt, der Nullpunktbildner 1 erzeugt einen künstlichen Sternpunkt. Hingegen erscheint der Nullpunktbildner 1 bezüglich des GIC-Gleichstroms niederohmig, d.h. der GIC sieht vom komplexen Widerstand nur dessen ohmschen Anteil.

Um einen kleinen ohmsche Widerstand des Nullpunktbildners 1 zu erreichen, weist dieser eine kleine Windungszahl und eine geringe Stromdichte auf. Da der Nullpunktbildner 1 nur im Leerlauf arbeitet, müssen dessen Wicklungen 8,9 nur für die verhältnismäßig kleinen GIC Ströme (etwa 100 A) ausgelegt werden.

Es kann als großer Vorteil der Erfindung angesehen werden, dass der Nullpunktbildner 1 rein passiv funktioniert. Er besteht nur aus passiven Bauteilen, die an sich aus dem Transformatorbau bekannt sind. In seinem Betriebsverhalten verhält sich der Nullpunktbildner 1 wie ein im Leerlauf betriebener Transformator. Der Nullpunktbildner 1 kann daher ständig mit dem Energieversorgungs-Netz 12 verbunden bleiben.

Um Verluste der Schutzvorrichtung 10 noch weiter zu verringern, kann vorgesehen sein, den Nullpunktbildner 1 quasi bedarfsweise an die Zuleitungen 2 eines Oberspannungsnetzes zu schalten. Für diese Variante der Erfindung ist in den Figuren 1, 2,3 die Schaltvorrichtung 5 vorgesehen. Da in diesem Fall die Schutzeinrichtung 10 nur temporär in Betrieb ist, d.h. nur dann, wenn tatsächlich GIC-Ströme fließen bzw. zu erwarten sind, ist die Verlustleistung im weichmagnetischen Kern unkritisch, was den Einsatz von kostengünstigen Materialien ermöglicht. Kornorientiertes Elektroblech ist nicht zwingend erforderlich, da Ummagnetisierungsverluste eine untergeordnete Rolle spielen. Für die Wicklung 8 bzw. 9 kann Aluminium verwendet werden. Für diese kostengünstige Ausführung kann ein Flachleiter verwendet werden, der vergleichsweise preiswert ist. Von Bedeutung ist lediglich, dass der ohmsche Wicklungswiderstand im Vergleich zu Trafo 4 bzw. Umspannstation 3 einen geringen Wert aufweist. Im dargestellten Ausführungsbeispiel ist das Verhältnis der Nullwiderstände eins zu zehn.

An dieser Stelle sei nochmals angemerkt, dass die Schaltvorrichtung 5 optional ist, d.h. der erfindungsgemäße Effekt wird auch ohne diese Schaltvorrichtung 5 erreicht.

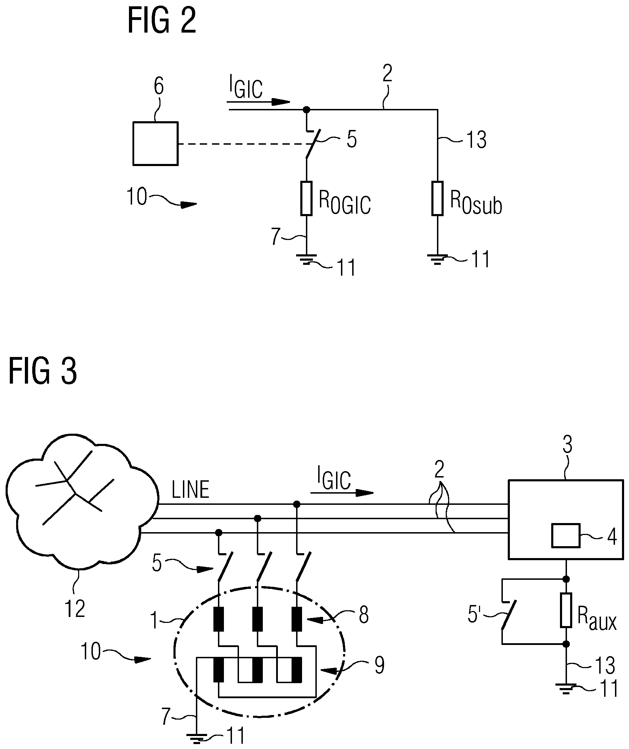

Ein Kriterium für die Zuschaltung im Netz 12 eines Energieversorgers kann beispielsweise ein von einer (globalen) GIC-Erfassung- und/oder Meldeeinrichtung 6 empfangenes Signal sein. Dies ist in Figur 2 schematisch dargestellt.

Figur 2 zeigt ein vereinfachtes Ersatzschaltbild, in welchem die erfindungsgemäße Schutzeinrichtung 10 als Parallelschaltung eines ohmsche Widerstandes (R_{0GIC} Nullpunktwiderstand des Nullpunktbildners) mit einem ohmsche Widerstand der Umspannstation 3 (R_{0sub} Nullpunktwiderstand der Umspannstation). Wie eingangs bereits erwähnt, ist der durch Sonnenwind in den Leitungen eines Energieversorgungssystems 12 induzierte GIC ein niederfrequenter Mischstrom, der in einem Betrachtungszeitraum als Gleichstrom angesehen werden kann. Da für diesen niederfrequenten GIC-Strom I_{GIC} im Wesentlichen die ohmschen Widerstände R_{0GIC} und R_{0sub} bestimmend sind, sind in diesem Ersatzschaltbild der Figur 2 nur die Nullwiderstände von Ableiteinrichtung 1 und Transformator bzw. Substation 2 gezeichnet. Der ohmsche Widerstand des Nullpunktbildners 1 ist kleiner als der ohmsche Widerstand der Substation bzw. des Transformators 2. Wie bereits gesagt hat dies den Effekt, dass ein auf der Zuleitung 2 zu einem Transformator 1 fließender GIC entsprechend dem gewählten Widerstandsverhältnis R_{0GIC}/R_{0sub} zur Erde abgeleitet wird, bevor er im Transformator 4 Schaden anrichten kann.

Figur 3 zeigt eine zweite Variante der Erfindung, bei der in die Betriebserdung einer Umspannstation 3 (Substation oder ein einzelner Transformator 4) eingegriffen wird, und dieser ohmsche Widerstand zwischen Sternpunkt und Erde erhöht wird, indem ein Hilfswiderstand Rₐᵤₓ vorgesehen wird. Indem man jedem Transformator 4 in der Substation 3 zwischen Sternpunkt und Erde diesen Hilfswiderstand Rₐᵤₓ schaltet, wird die Sternpunkterdung 13 hochohmig. Auch hier ist das Widerstandsverhältnis wie oben ausgeführt so gestaltet, dass der störende GDC über den geringeren ohmsche Widerstand der Ableiteinrichtung 1 zur Erde ab fließt, bevor er in einem Transformator 4 Schaden anrichten kann. Die Stromaufteilung erfolgt wieder indirekt proportional zu dem Verhältnis der Widerstände in Ableiteinrichtung und Umspannstation 3 bzw. Transformator 4.

In Figur 3 ist parallel zum Hilfswiderstand Rₐᵤₓ wieder ein Schalter 5' gezeichnet, mithilfe dessen der Hilfswiderstand Rₐᵤₓ bedarfsweise hinzu geschaltet werden kann, d.h. der Schalter 5' ist geöffnet für den Fall, dass in der Zuleitung 2 ein GIC fließt. Der Schalter 5' ist geschlossen, wenn kein GIC erwartet wird.

Zusammenfassend gesagt liegt der wesentliche Vorteil der Erfindung darin, dass zum GIC-Schutz nur völlig passiv wirkende Bauelemente verwendet werden. Die Lösung beinhaltet also keine gesteuerten Bauelemente, wie beispielsweise gesteuerte Ventile samt komplexer Steuerschaltung.

Ein weiterer Vorteil kann darin gesehen werden, dass die Betriebskosten sehr gering gehalten werden können. Wenn der Nullpunktbildner nur bedarfsweise zugeschaltet wird, kann dieser sehr kostengünstig hergestellt werden. Diese Betriebsweise ermöglicht die Verwendung billiger weichmagnetischer Materialien. Sofern im Sternpunkt der Umspannstation 3 ein Hilfswiderstand Rₐᵤₓ verwendet wird, braucht dieser nur für den Nullstrom ausgelegt werden, was mit geringem Aufwand möglich ist. Mittels eines parallel liegenden Schalters 5' kann dieser Hilfswiderstand Rₐᵤₓ bedarfsweise in den Erdstromkreis geschalteten werden.

In einem Netz 12 zur Verteilung und Übertragung elektrischer Energie sind üblicherweise an Schnittstellen zwischen Mittelspannung und Niederspannung mehrere Umspannstationen vorhanden, die jeweils einen oder mehrere Transformatoren 4 umfassen. Die oben beschriebene Schutzvorrichtung kann in jeder oberspannungsseitigen Zuleitung einer Trafostation implementiert sein.

Obwohl die Erfindung im Detail anhand der oben dargestellten bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Zusammenstellung der verwendeten Bezugszeichen

- 1: Nullpunktbildner
- 2: Zuleitung
- 3: Umspannstation
- 4: Transformator
- 5: Schaltvorrichtung
- 6: Erfassung- und/oder Meldeeinrichtung
- 7: Strompfad
- 8: zuleitungsseitige Wicklungsanordnung des Nullpunktbildners
- 9: erdseitige Wicklungsanordnung des Nullpunktbildners
- 10: Schutzeinrichtung
- 11: Erde
- 12: Netz zur Verteilung und Übertragung elektrischer Energie
- 13: Sternpunkterdung

- R_{0GIC}: Nullpunktwiderstand des Nullpunktbildners
- R_{0sub}: Nullpunktwiderstand der Umspannstation

- Rₐᵤₓ: Hilfswiderstand

- I_{GIC}: GIC-Strom (DC-Anteil)

## Patentansprüche

1. Schutzeinrichtung (10) für einen Transformator (4), der oberspannungsseitig mittels Zuleitungen (2) an ein Netz (12) zur Übertragung und Verteilung elektrischer Energie angeschlossen ist, wobei der Transformator (4) eine Sternpunkterdung (13) aufweist, wobei die Schutzeinrichtung für jede Zuleitung (2) einen Nullpunktbildner (1) umfasst mittels welchem die Zuleitung (2) auf Erde (11) geschaltet ist, **dadurch gekennzeichnet, dass** der Nullpunktbildner (1) einen Nullpunktwiderstand (R_{0GIC}) aufweist, der kleiner ist als der Nullpunktwiderstand (R_{0sub}) der Sternpunkterdung (13), so dass ein auf den Zuleitungen (2) fließender Geomagnetically Induced Current, GIC, zur Erde (11) abgeleitet ist.

2. Schutzeinrichtung nach Anspruch 1, **dadurch gekennzeichnet, dass** der Wert des Nullpunktwiderstandes (R_{0GIC}) des Nullpunktbildners (1) ein Zehntel oder weniger des Wertes des Nullpunktwiderstandes (R_{0sub}) Sternpunkterdung (13) ist.

3. Schutzeinrichtung nach Anspruch 1 oder 2, **dadurch gekennzeichnet, dass** der Nullpunktbildner (1) als 3-Phasen-Transformator ausgebildet ist, der Wicklungsanordnung gebildet aus zwei 3-strängigen Wicklungen (8,9) aufweist, die in Zickzack geschaltet ist.

4. Schutzeinrichtung nach Anspruch 3, **dadurch gekennzeichnet, dass** jeder Wicklungsstrang (8) mittels einer Verbindungsleitung mit einer zugeordneten Leitung (2) verbunden ist.

5. Schutzeinrichtung nach Anspruch 4, **dadurch gekennzeichnet, dass** in jeder Verbindungsleitung eine Schaltvorrichtung (5) angeordnet ist, über welche der Nullpunktbildner (1) an die Zuleitung (2) schaltbar ist.

6. Schutzeinrichtungen nach Anspruch 3, **dadurch gekennzeichnet, dass** der Nullpunktbildner (1) einen aus Blechlamellen geschichteten magnetischen Kern aufweist, der aus herkömmlichen Elektroblech hergestellt ist.

7. Schutzeinrichtung Anspruch 3, **dadurch gekennzeichnet, dass** der Werkstoff für die Wicklungen des Nullpunktbildners (1) Aluminium ist.

8. Schutzeinrichtung nach Anspruch 7, **dadurch gekennzeichnet, dass** jede Wicklung aus einem mit einer Isolation versehenen Flachleiter gebildet ist.

9. Schutzeinrichtung nach Anspruch 8, **dadurch gekennzeichnet, dass** die Isolation des Flachleiters eine Isolationsklasse aufweist, die kleiner ist als eine Isolationsklasse einer Primär- oder Sekundärwicklung eines Transformators (4).

10. Schutzeinrichtung nach einem der Ansprüche 4-8, **dadurch gekennzeichnet, dass** die Schaltvorrichtung (5) mit einer Erfassung- und/oder Meldeeinrichtung (6) für Geomagnetically Induced Current, GIC, signalleitend verbunden ist.

11. Verwendung der Schutzeinrichtung nach einem der Ansprüche 1-10 in einem Netz (12) zur Übertragung und Verteilung elektrischer Energie.

## Claims

1. Protective device (10) for a transformer (4) which is connected on the high-voltage side by means of supply lines (2) to a network (12) for the transmission and distribution of electrical energy, wherein the transformer (4) has a neutral grounding (13),
wherein
the protective device comprises a grounding transformer (1) for each supply line (2), by means of which the supply line (2) is connected to ground (11), **characterised in that** the grounding transformer (1) has a neutral point resistance (R_{0GIC}) which is lower than the neutral point resistance (R_{0sub}) of the neutral grounding (13), such that a Geomagnetically Induced Current (GIC) flowing on the supply lines (2) is diverted to ground (11).

2. Protective device according to claim 1, **characterised in that** the value of the neutral point resistance (R_{0GIC}) of the grounding transformer (1) is one tenth or less of the value of the neutral point resistance (R_{0sub}) of the neutral grounding (13).

3. Protective device according to claim 1 or 2, **characterised in that** the grounding transformer (1) is designed as a three-phase transformer that has a winding arrangement which is formed by two three-phase windings (8, 9) and is zigzag connected.

4. Protective device according to claim 3, **characterised in that** each winding phase (8) is connected to an assigned line (2) by means of a connection line.

5. Protective device according to claim 4, **characterised in that** a switching apparatus (5), by way of which the grounding transformer (1) can be connected to the supply line (2), is arranged in each connection line.

6. Protective device according to claim 3, **characterised in that** the grounding transformer (1) has a layered magnetic core of metal laminations, which is made from conventional electric sheet steel.

7. Protective device according to claim 3, **characterised in that** the material for the windings of the grounding transformer (1) is aluminium.

8. Protective device according to claim 7, **characterised in that** each winding is formed by an insulated flat conductor.

9. Protective device according to claim 8, **characterised in that** the insulation of the flat conductor has an insulation class which is lower than the insulation class of a primary or secondary winding of a transformer (4).

10. Protective device according to one of claims 4 to 8, **characterised in that** the switching apparatus (5) is connected for signalling purposes to a detection and/or reporting device (6) for Geomagnetically Induced Current (GIC).

11. Use of the protective device according to one of claims 1 to 10 in a network (12) for the transmission and distribution of electrical energy.

## Revendications

1. Dispositif de protection (10) pour un transformateur (4) qui est, côté haute tension, raccordé au moyen de lignes d'alimentation (2) à un réseau (12) de transport et de distribution d'énergie électrique, le transformateur (4) comportant une terre triphasée (13), le dispositif de protection comprenant, pour chaque ligne d'alimentation (2), un générateur de point zéro (1) au moyen duquel la ligne d'alimentation (2) est mise à la terre (11), **caractérisé en ce que** le générateur de point zéro (1) présente une résistance de point zéro (R_{0GIC}) qui est inférieure à la résistance de point zéro (R_{0sub}) de la terre triphasée (13), de sorte qu'un courant induit géomagnétiquement, GIC, qui circule sur les lignes d'alimentation (2) est dérivé vers la terre (11).

2. Dispositif de protection selon la revendication 1, **caractérisé en ce que** la valeur de la résistance de point zéro (R_{0GIC}) du générateur de point zéro (1) est un dixième ou moins de la valeur de la résistance de point zéro (R_{0sub}) de la terre triphasée (13).

3. Dispositif de protection selon la revendication 1 ou 2, **caractérisé en ce que** le générateur de point zéro (1) est réalisé en tant que transformateur 3 phases et **en ce que** l'ensemble d'enroulement formé de deux enroulements à 3 brins (8,9) est monté en zigzag.

4. Dispositif de protection selon la revendication 3, **caractérisé en ce que** chaque brin d'enroulement (8) est relié au moyen d'une ligne de liaison à une ligne associée (2) .

5. Dispositif de protection selon la revendication 4, **caractérisé en ce qu'**est agencé, dans chaque ligne de liaison, un dispositif de commutation (5) via lequel le générateur de point zéro (1) peut être commuté sur la ligne d'alimentation (2).

6. Dispositifs de protection selon la revendication 3, **caractérisé en ce que** le générateur de point zéro (1) comporte un noyau magnétique composé de lamelles en tôle, qui est réalisé à partir de tôle magnétique conventionnelle.

7. Dispositif de protection selon la revendication 3, **caractérisé en ce que** le matériau utilisé pour les enroulements du générateur de point zéro (1) est de l'aluminium.

8. Dispositif de protection selon la revendication 7, **caractérisé en ce que** chaque enroulement est formé d'un conducteur plat pourvu d'une isolation.

9. Dispositif de protection selon la revendication 8, **caractérisé en ce que** l'isolation du conducteur plat présente une classe d'isolation qui est inférieure à une classe d'isolation d'un enroulement primaire ou secondaire d'un transformateur (4).

10. Dispositif de protection selon l'une des revendications 4 à 8, **caractérisé en ce que** le dispositif de commutation (5) est relié de manière conductrice de signaux à un dispositif de détection et/ou de signalisation (6) de courant induit électromagnétiquement, GIC.

11. Utilisation du dispositif de protection selon l'une des revendications 1 à 10 dans un réseau (12) de transport et de distribution d'énergie électrique.
